(19) Europäisches Patentamt
European Patent Office
Office européen des brevets

(11) **EP 4 510 079 B1**

(12) **EUROPEAN PATENT SPECIFICATION**

(45) Date of publication and mention
of the grant of the patent:
**08.07.2026 Bulletin 2026/28**

(21) Application number: **24150479.4**

(22) Date of filing: **05.01.2024**

(51) International Patent Classification (IPC):
***G06T 11/23*** (2026.01)

(52) Cooperative Patent Classification (CPC):
**G06T 11/23**

(54) **A METHOD FOR NOISE INJECTION INTO 2D GEOMETRIC SHAPES DESCRIBED BY FREEMAN CHAIN CODES**

VERFAHREN ZUR RAUSCHINJEKTION IN GEOMETRISCHE 2D-FORMEN, DIE DURCH FREEMAN-KETTENCODES BESCHRIEBEN WERDEN

PROCÉDÉ D'INJECTION DE BRUIT DANS DES FORMES GÉOMÉTRIQUES 2D DECRITES PAR DES CODES DE CHAÎNE DE FREEMAN

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**19.02.2025 Bulletin 2025/08**

(73) Proprietor: **Univerza v Mariboru**
**2000 Maribor (SI)**

(72) Inventors:
• **LUKAC, LUKA**
**2000 MARIBOR (SI)**
• **STRNAD, DAMJAN**
**2000 MARIBOR (SI)**
• **NERAT, ANDREJ**
**2000 MARIBOR (SI)**
• **ZALIK, BORUT**
**2000 MARIBOR (SI)**

(74) Representative: **Patentni Biro AF d.o.o.**
**Kotnikova 32, p.p. 2706**
**1001 Ljubljana (SI)**

(56) References cited:
**US-A- 5 982 386**

• **VALLEZ NOELIA ET AL: "Diffeomorphic transforms for data augmentation of highly variable shape and texture objects", COMPUTER METHODS AND PROGRAMS IN BIOMEDICINE, ELSEVIER, AMSTERDAM, NL, vol. 219, 25 March 2022 (2022-03-25), XP087047780, ISSN: 0169-2607, [retrieved on 20220325], DOI: 10.1016/ J.CMPB.2022.106775**
• **FRANK P KUHL ET AL: "Elliptic Fourier Features of a Closed Contour", COMPUTER GRAPHICS AND IMAGE PROCESSING, US, vol. 18, no. 3, 1 March 1982 (1982-03-01), pages 236 - 258, XP001375204, ISSN: 0146-664X**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of invention

The invention belongs to the field of computer science and informatics. It relates to a method of supervised noise injection into 2D geometric shapes, described by Freeman chain codes. The method produces altered shapes with the embedded noise, and, consequently, enables the artificial augmentation of geometric shape datasets. The invention also relates to a computer program comprising executable instructions for performing the procedure as well as to a computer readable medium comprising said computer program.

### Background of invention and technical problem

Noise usually represents an undesirable element of a signal. Therefore, in the past, many denoising methods were developed in order to diminish its presence. Unfortunately, none of the proposed techniques can entirely remove noise from a signal, resulting in signal processing techniques always operating on noisy signals. Noise is present in descriptions of digitalised geometric shapes as well. Even though it can emerge at different stages of shape processing (e.g., during geometric transformations or the digitalisation process), the existing methods, dealing with geometric shapes, primarily focus on deviations from their ideal measurements. Consequently, shape processing methods also operate on noisy data.

Noise injection into training data is a common technique in the field of artificial neural networks, where it can be used either as a data augmentation or as a regularisation method. Both procedures are utilised to reduce the probability of local minima occurrences during the training phase of a neural network. Furthermore, noise injection can also successfully prevent overfitting of a neural network, as unlimited amounts of artificial samples could be produced using such approach.

In terms of images, there are many known types of noise, such as Gaussian noise, salt-and-pepper noise, quantisation noise, shot noise, and photographic film grain. In order to artificially produce new image samples, an arbitrary type of noise can be injected into an image. However, quite often, the main object of interest is not the whole image but only a set of shapes inside of it. Therefore, it is essential that noise is injected into separate geometric shapes instead into the entire image. The technical problem, addressed by the present invention, is the development of a method for injecting noise into geometric shapes, described by eight- or four-directional Freeman chain codes.

### State of the art

The process of noise injection into datasets of various multimedia elements (e.g., image, audio, video) has been utilised for a long time as a data augmentation and/or regularisation technique. Different approaches for the injection of noise have been proposed, among which, injection of Gaussian noise is the most common one. To the best of our knowledge, none of the related methods dealt with the noise injection into geometric shapes described by Freeman chain codes. The following state of the art section consists of two parts. In the first part, we summarise several related patents dealing with the noise injection. In the second part, we summarise non-patent publications, i.e., scientific journal and conference papers that address the problem of the injection of noise into various types of data.

In patent application US20210035563A1, noise injection for the augmentation of audio samples during the training of acoustic models is proposed. Several types of augmentations may be applied to the data: stationary noise within a fixed spectrum, semi-stationary noise in a variable spectrum, non-stationary noise, and reverberation. Noise can be injected into audio data either in the time domain or in the frequency domain. Furthermore, different noise injection conditions (such as reverberation models, distinct noise levels, distinct noise spectra, distinct patterns of non-stationary noise, or music residuals) can be chosen for different audio samples.

A part of the patent US11030487B2 describes the injection of noise into images as a data augmentation technique. In the first step, the effective dynamic range of an image is reduced to a pre-defined signal strength or variance. After that, spatially uncorrelated (Gaussian) or spatially correlated (Fourier phase-scrambled) noise is introduced to separate image channels. Different noise images are introduced to the red, green, and blue channels during the augmentation of the image chrominance, while the same noise image is introduced to the red, green, and blue channels during the augmentation of the image luminance.

The patent US11257272B2 proposes a method for generating synthetic image data for machine learning and their augmentation using different approaches. One of the approaches is the injection of noise into raw generated images. A user-defined amount of Gaussian noise is distributed evenly throughout an entire image and/or to particular locations within the selected raw image.

In the paper "Noise injection for training artificial neural networks: A comparison with weight decay and early stopping", Medical Physics, 36, pp. 4810-4818, 2009, Zur et al. describe the noise injection into training data of artificial neural networks to reduce overfitting. A zero-mean Gaussian kernel is used for the data augmentation. A noise vector is added to training samples during the training iterations, which causes the training data to jitter in the feature space. The standard deviation of the noise kernel is based on the cross validation and is determined automatically during each training iteration.

In the paper "Multiscale generative adversarial network for real-world super-resolution", Concurrency and Computation: Practice and Experience, 33, pp. e6430 2021, Sun et al. describe the reconstruction of high-resolution images from low-resolution inputs. This procedure is also known as super-resolution. Neural network training samples are constructed by applying a down-sampling operator to a high-resolution image. After that, noise is injected into obtained low-resolution images in a way that the noise distribution is similar to the noise distribution in the original image.

Ji et al. propose the noise injection to images as a crucial step during the process of obtaining super-resolution images in the paper "Real-world super-resolution via kernel estimation and noise injection", Proceedings of the IEEE/CVF Conference on Computer Vision and Pattern Recognition Workshops, pp. 466-467, 2020. During the training process, noise is injected into a downsampled image. In order to ensure a similar noise distribution to the source image, noise patches from the source dataset are obtained, which are added to the image in the next step.

In the paper "Effects of label noise on performance of remote sensing and deep learning-based water body segmentation models", Cybernetics and Systems, 53, pp. 581-606, 2022, Rahaman et al. analyse the noise injection into satellite label images and its impact on water body segmentation machine learning models. Gaussian noise is injected into images with the certain proportions: 1%, 5%, 10%, 15%, 20%, 25%, 30%, 40%, 50%, and 60%. As labels are in a binary format, pixel value is flipped (i.e., 0 to 1 and vice versa) during the noise injection. Generally, the addition of Gaussian noise to satellite label images increases the amount of water body pixels as their amount is usually much smaller than the amount of non-water body pixels.

A part of the paper "Noise estimation of natural images via statistical analysis and noise injection", IEEE Transactions on Circuits and Systems for Video Technology, 25, pp. 1283-1294, 2014, by Tang et al. describes noise estimation of natural images using statistical analysis and noise injection. At first, a noisy image is transformed to the transform space by the wavelet transform. After that, kurtosis is calculated for each frequency index and used to estimate the degree of noise for the observed image. In the case of a low degree of noise, estimations can often be subpar. Therefore, noise is injected into the image, and the process of the estimation is repeated in order to increase the prediction accuracy. The noise is generated and injected into the image in the pixel domain, while the analysis of the image and the estimation of noise are performed in the wavelet domain.

The paper "Noise level estimation for natural images based on scale-invariant kurtosis and piecewise stationarity", IEEE Transactions on Image Processing, 26, pp. 1017-1030, 2016, by Dong et al. also considers noise injection in order to enhance the estimation of noise in images. In the beginning, a noisy image is transformed into the linear transform domain, which enables the estimation of both Gaussian and non-Gaussian noise cases. The image is then divided into disjoint regions, and the noise estimation using kurtosis is performed. The next step is the injection of the independent and identically distributed noise into the noisy image to rectify the estimation error. In the final step, the estimation of noise is performed again.

Ma et al. used a similar approach in the paper "Efficient image noise estimation based on skewness invariance and adaptive noise injection", IET Image Processing, 14, pp. 1393-1401, 2020. The proposed process contains a description of the adaptive noise injection in order to efficiently estimate the degree of noise in a noisy image. Firstly, the image is transformed into the frequency domain, where the convolution with each filter from the 8x8 DCT basis is performed. Initial estimation of the noise level is based on the skewness of the transformed image. Gaussian noise is injected into the transformed noisy image as an estimation error correction strategy if the estimated degree of noise is lower than the defined threshold. The strategy assumes that the injected noise is independent of the noise-free image and of the noise that is present in the image.

The paper "Ensemble methods and data augmentation by noise addition applied to the analysis of spectroscopic data", Analytica Chimica Acta, 533, pp. 147-159, 2005, by Sáiz-Abajo et al. includes the description of the noise injection into near-infrared spectroscopy measurements. A separate measurement is injected with one of the six proposed types of noise: additive, multiplicative, intensity-dependent, local-shift, instrumental, or combination noise. Implementation of each type of noise includes a modifiable parameter, which is in most cases represented by the standard deviation of the noise.

Document US5982386A discloses methods for image boundary correction by fractal processing, wherein selected parts of the edges are basically defined by fractions. Three different symbols and describe the successive movements relatively. Therefore, the standard "Freeman chain codes" defined in claim 1 is not used. In the next step, D1 determines one section of one of the edges and convert only that section into a chain code notation, after which the method iterates through individual symbols in the chain code (termed "code words"). This method significantly differs from the present invention.

**Description of the solution to the technical problem**

The goal and object of the invention is to establish a novel method for the noise injection into two-dimensional geometric shapes that are described by Freeman chain codes. The method operates on geometric shapes that can be either open or closed, and simple or self-intersecting. The technical problem is solved as defined in the independent claims. Preferred embodiments of the invention are defined in the dependent claims.

The invention defines a sequence of steps for the injection of noise into geometric shapes that are described by one or more chains, which consist of Freeman chain code sequences. The Freeman chain code sequence type can be either eight-directional (F8) or four-directional (F4). The noise application is performed separately for each chain of the observed geometric shape, wherein consecutive pairs of chain codes are iterated through. Pairs are selected on a random basis with the user-defined probability, where the selection of a certain pair in a certain noise injection iteration does not prevent its selection in further noise injection iterations. A shape boundary alteration type is chosen for each selected pair according to the defined alteration rulesets for eight- and four-directional Freeman chain codes. There are seven different shape boundary alteration types in the case of eight-directional Freeman chain codes:

- *REMOVE* (removing the chain codes that define opposite directions),

- *PUSH* (transforming two equal consecutive chain codes into two chain codes that define perpendicular directions and form a turn),

- *WRAP* (forming a turn from two equal consecutive diagonal chain codes),

- *FLIP* (switching the chain codes in a pair),

- *PULL* (transforming a turn into two equal consecutive chain codes),

- *CUT* (transforming a pair of chain codes into a single chain code by cutting a turn), and

- *ROTATE* (rotating the chain codes in a pair).

A certain type of the alteration is selected based on directions defined by both chain codes in the observed chain code pair. The conditions are given in equations 1 and 2 for eight- and four- directional Freeman codes, respectively, as described further below.

In the case of four-directional Freeman chain codes, three alterations are available:

- *WRAP* (forming a turn from two equal consecutive diagonal chain codes),
- *REMOVE* (removing the chain codes that define opposite directions), and
- *FLIP* (switching the chain codes in a pair).

In this case, the suitable alteration is also selected based on directions defined by both chain codes in the observed chain code pair. Before the replacement of the original chain segment with an altered segment, the topology check of the geometric shape is performed based on the known methods from the field of Computational Geometry. The selected alteration is accepted if the topological characteristics of the shape (e.g., number of holes, number of self-intersections) are not changed. In such case, the original chain segment is replaced by the modified chain segment. In case the topology check indicates a change in the number of holes or self-intersections, the alteration is rejected and the original chain segment is not replaced. The process continues with the next random sequence pair regardless of the topology check outcome. The described method is repeated for other randomly selected pairs of chain codes in each chain of the observed geometric shape.

The procedure for the noise injection into 2D geometric shapes described by Freeman chain codes comprises the following steps:

a) reading of a geometric shape that is described by eight- or four-directional Freeman chain codes from a file of an image and/or a geometrical object,
b) division of the geometric shape data, obtained in step a), into separate chains according to the data in the file,
c) iteration through the consecutive pairs of chain codes in separate chains obtained in step b),
d) random selection of chain code pairs determined in step c),
e) selection of a shape boundary alteration type according to the two chain codes of a pair determined in step d), wherein the shape boundary alteration type is selected from the group consisting of: *WRAP, REMOVE,* and *FLIP,* for four-directional Freeman chain codes, or in the group consisting of: *REMOVE, PUSH, WRAP, FLIP, PULL, CUT,* and *ROTATE* for eight-directional Freeman chain codes,
f) performing the topology check of the geometric shape with chains obtained in step b) and the selected shape boundary alteration obtained in step e),

g) replacing the chain code pair, selected in step c), with the shape boundary alteration, determined in step e) if the topology check result, obtained in step f), is successful.

The procedure for the noise application is iterative, therefore, steps c) - f) are repeated for the user-defined number of iterations. The degree of noise in the geometric shape is evaluated after each iteration using the Fractal Dimension evaluation metric. The method reaches a stop condition if the value of Fractal Dimension exceeds the user-defined maximum value. If such condition is fulfilled, the noise injection is stopped before the execution of the user-defined number of iterations.

The invention comprehensively addresses the noise injection into 2D geometric shapes described by Freeman chain codes, where the injected noise does not alter the basic topological characteristics of geometric objects. The procedure is fast, easy to implement, and computationally undemanding. Furthermore, the procedure enables injection of arbitrary degrees of noise according to user demands, which increases its usability and the ability to generate diverse geometric shapes.

The invention can be used for increasing the robustness and accuracy of various machine learning methods operating with geometric shapes. Its possible applications would be the enhanced recognition of internal body parts in medical images, more accurate classification of traffic signs and traffic signalisation, improved segmentation, and classification of objects in aerial data, and many others.

The invention also relates to a computer program comprising executable instructions for performing the procedure as described above, as well as to a computer readable medium comprising said computer program.

The invention will be described in further detail in the continuation of the description on the basis of exemplary embodiments, examples showing test objects and results of the noise injection process, as well as figures, which show:

Figure 1: A flowchart of the method for the noise injection into Freeman chain codes

Figure 2: The directions of the eight-directional Freeman chain code

Figure 3: The directions of the four-directional Freeman chain code

Figure 4: Noise injection into the boundary of the geometric shape described by an F8 chain code sequence

Figure 5: The alteration REMOVE applied to a pair of eight-directional Freeman chain codes

Figure 6: The alteration *PUSH* applied to a pair of eight-directional Freeman chain codes

Figure 7: The alteration WRAP applied to a pair of eight-directional Freeman chain codes

Figure 8: The alteration FLIP applied to a pair of eight-directional Freeman chain codes

Figure 9: The alteration PULL applied to a pair of eight-directional Freeman chain codes

Figure 10: The alteration CUT applied to a pair of eight-directional Freeman chain codes

Figure 11: The alteration ROTATE applied to a pair of eight-directional Freeman chain codes

Figure 12: The alteration WRAP applied to a pair of four-directional Freeman chain codes

Figure 13: The alteration REMOVE applied to a pair of four-directional Freeman chain codes

Figure 14: The alteration FLIP applied to a pair of four-directional Freeman chain codes

Figure 15: The topology check of the geometric shape after the selection of an alteration

Figure 16: Images of test objects: Line Segment, Twist, and Butterfly

Figure 17: Noise injection into the Line Segment

Figure 18: Noise injection into Twist

Figure 19: Noise injection into the Butterfly

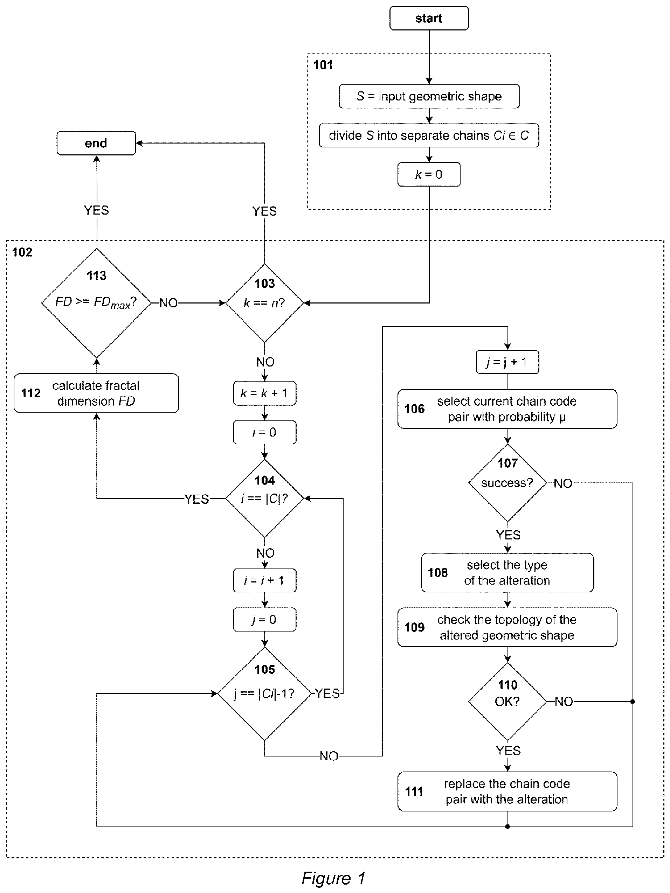

Figure 1 shows the flowchart of the method for the injection of noise into 2D geometric shapes described by Freeman chain codes. After the initialisation (block 101), the iterative noise injection procedure into the given geometric shape $S$ is performed (block 102). During the iteration through a separate chain $C_i$ (block 105), chain code pairs $c_{i,j}$ and $c_{i,j+1}$ are selected with the user-defined probability $\mu$ (block 106). If the selection is successful (block 107), the suitable type of the alteration is selected in the next step (block 108). The topology of $S$ with the selected alteration is checked after that (block 109). $c_{i,j}$ and $c_{i,j+1}$ are replaced with the alteration (block 111) if the alteration does not change the topological characteristics of $S$ (block 110). Such process is repeated for each $C_i \in C$ (block 104). The fractal dimension $FD$ of the altered shape is calculated (Mandelbrot, 1967) after the noise is injected into all chains (block 112). If $FD$ equals or is larger than the user-defined maximum fractal dimension $FD_{max}$, the injection of noise into $S$ is finished (block 113). Otherwise, if the current iteration k does not equal the user-defined maximum number of iterations n, a new iteration of noise injection on the altered shape is performed (block 103).

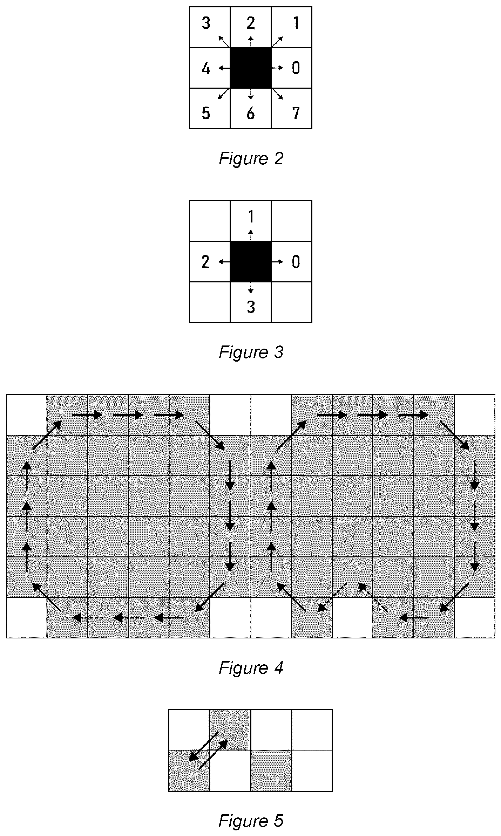

Figure 2 shows the possible movement directions from the currently observed pixel in the middle for an eight-directional Freeman chain code. Number 0 denotes the right movement, number 2 the upward movement, number 4 the left movement, and number 6 the downward movement, while the numbers 1, 3, 5, and 7 indicate the diagonal movements.

Figure 3 shows the possible movement directions from the currently observed pixel in the middle for a four-directional Freeman chain code. Number 0 denotes the right movement, number 1 the upward movement, number 3 the left movement, and number 4 the downward movement.

An example of the alteration for a 2D geometric shape is shown in Figure 4. A pair of consecutive chain codes is selected on a random basis (block 401) in the beginning. After that, an appropriate alteration is selected and applied to the geometric shape (block 402). The alteration is chosen according to the alteration rulesets where the selection is based on the chain code values. The ruleset for eight-directional Freeman chain codes is given in Equation 1, while the ruleset for four-directional Freeman chain codes is given in Equation 2. The input to the appropriate alteration ruleset is the pair of chain codes $c_{i,j}$ and $c_{i,j+1}$ where i denotes the index of the observed chain while j describes the index of the chain code inside the observed chain. According to the defined conditions, the output of both equations is a sequence of chain codes. Detailed descriptions of alterations are given in the continuation.

$$f(c_{i,j}, c_{i,j+1}) = \begin{cases} f_{REMOVE}(); & |c_{i,j} - c_{i,j+1}| = 4 \\ f_{PUSH}(c_{i,j}); & (c_{i,j} = c_{i,j+1}) \wedge (c_{i,j} \bmod 2 = 0) \\ f_{WRAP}(c_{i,j}); & (c_{i,j} = c_{i,j+1}) \wedge (c_{i,j} \bmod 2 = 1) \\ f_{FLIP}(c_{i,j}, c_{i,j+1}); & (|c_{i,j} - c_{i,j+1}| = 1) \vee \\ & (|c_{i,j} - c_{i,j+1}| = 7) \\ f_{PULL}(c_{i,j}, c_{i,j+1}); & ((|c_{i,j} - c_{i,j+1}| = 2) \vee \\ & (|c_{i,j} - c_{i,j+1}| = 6)) \wedge \\ & (c_{i,j} \bmod 2 = 1) \\ f_{FLIP/CUT}(c_{i,j}, c_{i,j+1}); & ((|c_{i,j} - c_{i,j+1}| = 2) \vee \\ & (|c_{i,j} - c_{i,j+1}| = 6)) \wedge \\ & (c_{i,j} \bmod 2 = 0) \\ f_{ROTATE/CUT}(c_{i,j}, c_{i,j+1}); & (|c_{i,j} - c_{i,j+1}| = 3) \vee \\ & (|c_{i,j} - c_{i,j+1}| = 5) \end{cases}$$

$$( 1 )$$

$$f(c_{i,j}, c_{i,j+1}) = \begin{cases} f_{WRAP}(c_{i,j}); & c_{i,j} = c_{i,j+1} \\ f_{REMOVE}(); & |c_{i,j} - c_{i,j+1}| = 2 \\ f_{FLIP}(c_{i,j}, c_{i,j+1}); & \text{otherwise} \end{cases}$$

$$( 2 )$$

Figure 5 illustrates the alteration *REMOVE* for a pair of opposite eight-directional Freeman chain codes, given in Equation 3. Block 501 displays the chain codes before the alteration while block 502 illustrates the chain code pair after the alteration.

$$f_{REMOVE}() = \langle \rangle$$

$$( 3 )$$

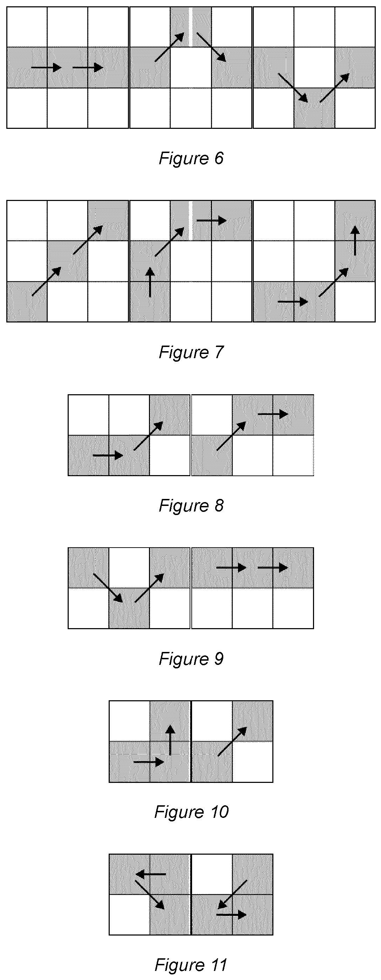

Figure 6 illustrates the alteration *PUSH* for a pair of eight-directional Freeman chain codes with their respective chain codes $c_{i,j}$ and $c_{i,j+1}$, given in Equation 4. Two equal consecutive chain codes are transformed into chain codes that form a turn. Two alteration options are possible (block 602 and block 603) from the initial situation (block 601), among which a certain alteration is chosen randomly.

$$f_{PUSH}(c_{i,j}) = \begin{cases} \langle(c_{i,j}+1) \bmod 8, (c_{i,j}+7) \bmod 8\rangle \\ \langle(c_{i,j}+7) \bmod 8, (c_{i,j}+1) \bmod 8\rangle \end{cases}$$

$$(4)$$

In Figure 7, the alteration *WRAP,* given in Equation 5, for a pair of eight-directional Freeman chain codes $c_{i,j}$ and $c_{i,j+1}$ (block 701) is presented. There are two options for applying the alteration: up (block 702) and down (block 703), where a certain option is selected on a random basis.

$$f_{WRAP}(c_{i,j}) = \begin{cases} \langle(c_{i,j}+1) \bmod 8, c_{i,j}, (c_{i,j}+7) \bmod 8\rangle \\ \langle(c_{i,j}+7) \bmod 8, c_{i,j}, (c_{i,j}+1) \bmod 8\rangle \end{cases}$$

$$(5)$$

The alteration *FLIP* triggers a pair of eight-directional Freeman chain codes $c_{i,j}$ and $c_{i,j+1}$ (block 801) to change their roles (block 802). The latter is given in Equation 6 and displayed in Figure 8.

$$f_{FLIP}(c_{i,j}, c_{i,j+1}) = \langle c_{i,j+1}, c_{i,j}\rangle$$

$$(6)$$

Figure 9 illustrates the alteration *PULL* for eight-directional Freeman chain codes. Block 901 displays an eight-directional Freeman chain code pair $c_{i,j}$ and $c_{i,j+1}$ while block 902 illustrates the selected chain code pair after the alteration, given in Equation 7.

$$f_{PULL}(c_{i,j}, c_{i,j+1}) = \begin{cases} \langle\frac{c_{i,j}+c_{i,j+1}}{2} \bmod 8, \frac{c_{i,j}+c_{i,j+1}}{2} \bmod 8\rangle; & |c_{i,j}-c_{i,j+1}| = 2 \\[2ex] \langle\frac{(c_{i,j}+c_{i,j+1}) \bmod 8}{2}, \frac{(c_{i,j}+c_{i,j+1}) \bmod 8}{2}\rangle; & |c_{i,j}-c_{i,j+1}| = 6 \end{cases}$$

$$(7)$$

The alteration *CUT* transforms a pair of eight-directional Freeman chain codes $c_{i,j}$ and $c_{i,j+1}$ (block 1001) into a single chain code (block 1002), shown in Figure 10. There are several conditions for selecting a certain action, which are given in Equation 8.

$$
f_{CUT}(c_{i,j}, c_{i,j+1}) = \begin{cases}
\langle \frac{c_{i,j}+c_{i,j+1}}{2} \rangle; & |c_{i,j} - c_{i,j+1}| = 2 \\[2em]
\langle \lceil \frac{c_{i,j}+c_{i,j+1}}{2} \rceil \rangle; & |c_{i,j} - c_{i,j+1}| = 3 \wedge \\
& ((c_{i,j} + c_{i,j+1} = 3) \vee \\
& (c_{i,j} + c_{i,j+1} = 7) \vee \\
& (c_{i,j} + c_{i,j+1} = 11)) \\[2em]
\langle \lfloor \frac{c_{i,j}+c_{i,j+1}}{2} \rfloor \rangle; & |c_{i,j} - c_{i,j+1}| = 3 \wedge \\
& ((c_{i,j} + c_{i,j+1} = 5) \vee \\
& (c_{i,j} + c_{i,j+1} = 9)) \\[2em]
\langle (\max\{c_{i,j}, c_{i,j+1}\} + 1) \bmod 8 \rangle; & |c_{i,j} - c_{i,j+1}| \neq 3 \wedge \\
& ((c_{i,j} + c_{i,j+1} = 5) \vee \\
& ((c_{i,j} + c_{i,j+1} = 6) \vee \\
& (c_{i,j} + c_{i,j+1} = 9)) \\[2em]
\langle (\min\{c_{i,j}, c_{i,j+1}\} - 1) \bmod 8 \rangle; & |c_{i,j} - c_{i,j+1}| \neq 3 \wedge \\
& c_{i,j} + c_{i,j+1} = 7
\end{cases}
$$

$$( 8 )$$

Figure 11 illustrates the alteration *ROTATE,* which rotates eight-directional $c_{i,j}$ and $c_{i,j+1}$ (block 1101) for an angle of 45° (block 1102). The latter is given in Equation 9, where one of two actions is selected according to certain conditions.

$$
f_{ROTATE}(c_{i,j}, c_{i,j+1}) = \begin{cases}
\langle (c_{i,j} + 1) \bmod 8, (c_{i,j+1} + 1) \bmod 8 \rangle; & (c_{i,j} + c_{i,j+1} = 3) \vee \\
& (c_{i,j} + c_{i,j+1} = 7) \vee \\
& (c_{i,j} + c_{i,j+1} = 11) \\[1.5em]
\langle (c_{i,j} + 7) \bmod 8, (c_{i,j+1} + 7) \bmod 8 \rangle; & (c_{i,j} + c_{i,j+1} = 5) \vee \\
& (c_{i,j} + c_{i,j+1} = 9)
\end{cases}
$$

$$( 9 )$$

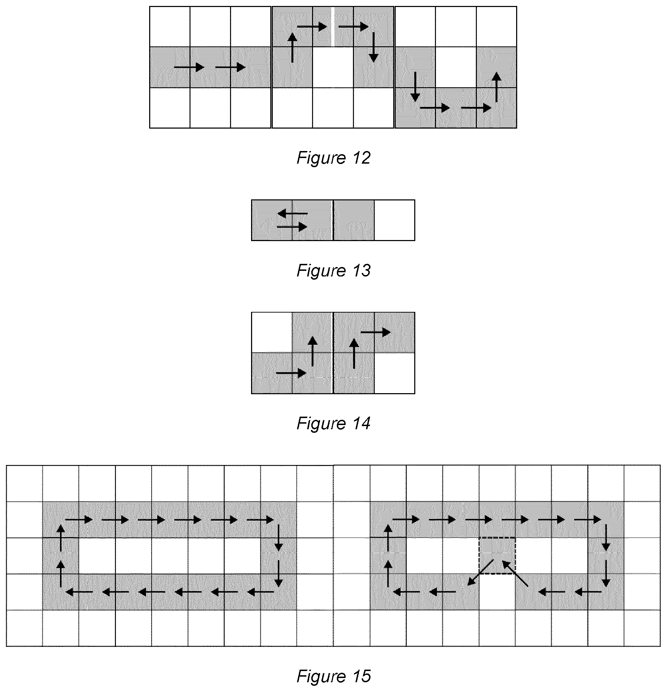

In Figure 12, the alteration *WRAP* for four-directional Freeman chain codes is shown, which transforms two equal chain codes (block 1201) into a U-turn. There are two options to perform this alteration (blocks 1202, 1203), among which the certain action is selected randomly, as given in Equation 10.

$$
f_{WRAP}(c_{i,j}) = \begin{cases}
\langle (c_{i,j} + 1) \bmod 4, c_{i,j}, c_{i,j}, (c_{i,j} + 3) \bmod 4 \rangle \\
\langle (c_{i,j} + 3) \bmod 4, c_{i,j}, c_{i,j}, (c_{i,j} + 1) \bmod 4 \rangle
\end{cases}
$$

$$( 10 )$$

Figure 13 illustrates the alteration *REMOVE* for a pair of opposite four-directional Freeman chain codes, as given in Equation 11. Block 1301 displays the chain codes before the alteration while block 1302 illustrates the chain code pair after the alteration.

$$f_{REMOVE}() = \langle\rangle$$

$$(11)$$

The alteration *FLIP* changes the roles of chain codes $c_{i,j}$ and $c_{i,j+1}$ (block 1402) in a pair of four-directional Freeman chain codes (block 1401). The latter is given in Equation 12 and displayed in Figure 14.

$$f_{FLIP}(c_{i,j}, c_{i,j+1}) = \langle c_{i,j+1}, c_{i,j}\rangle$$

$$(12)$$

Figure 15 displays the topology check of a geometric shape after the appropriate alteration is selected. The procedure verifies whether the selected alteration (block 1502) changes the topological characteristics (e.g., number of holes) of the observed geometric shape (block 1501). In such case, the topological check rejects the selected alteration. The topology check is independent of basic properties of the geometric shape (e.g., number of self-intersections and openness) and the type of the Freeman chain code the geometric shape is encoded with.

**Examples**

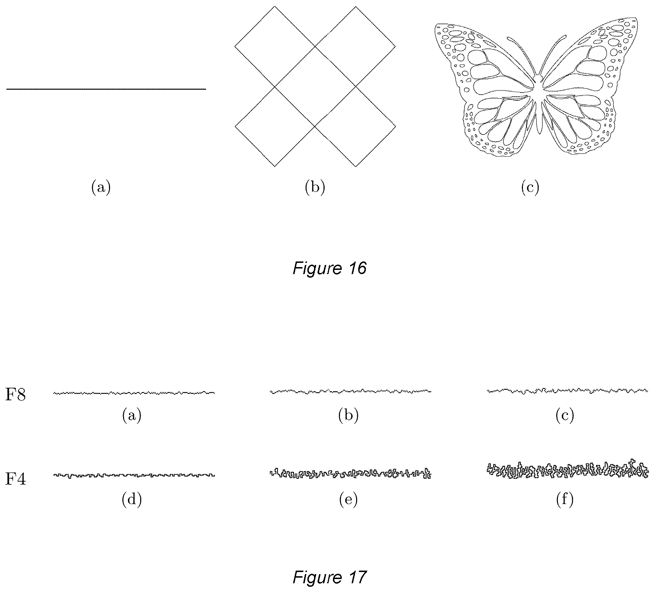

To demonstrate the results of the process according to the invention as described above three different test objects were used. Figure 16 shows the geometric shapes Line Segment (a), Twist (b), and Butterfly (c), on which the performance of the present method is tested. Each geometric shape was encoded with both eight- and four-directional Freeman chain codes (F4 and F8). The probability of an alteration $\mu = 0.1$ is used in order to enable injecting small amounts of noise in a single iteration of noise injection. The number of noise injection iterations is progressively increasing in the experiments. In each example, injection of noise into a test shape encoded with eight-directional Freeman chain codes (F8) is displayed in the upper row, while the injection of noise into a test shape encoded with four-directional Freeman chain codes (F4) is displayed in the lower row. Furthermore, for each example, (a) and (d) display the shape after 10 noise injection iterations, (b) and (e) after 50 noise injection iterations, while (c) and (f) after 100 noise injection iterations.

Figure 17 shows results of noise injection for the Line Segment, wherein the injected noise increases from 10 to 100 iterations but does not alter the general shape of the line, which is still easily recognizable.

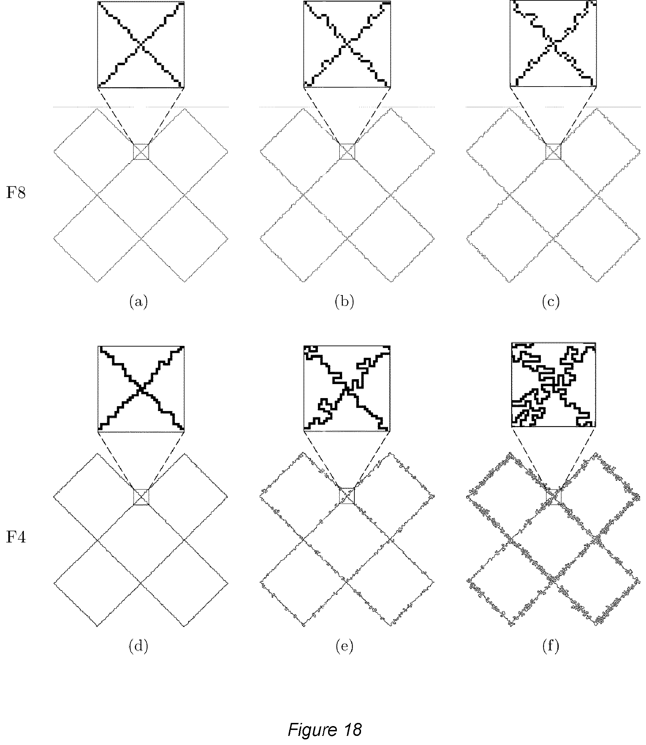

Figure 18 shows the results for the Twist shaped from a self-intersecting line, which with several intersections eventually forms a cross formed by five squares, wherein some details of the injected noise are shown in separate detailed sections. As shown in these detailed sections, the shape of the initial geometrical shape is not changed.

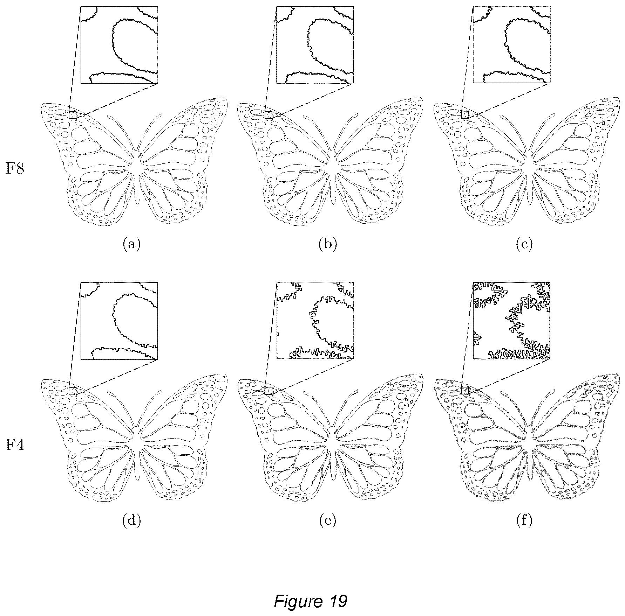

Similar is also valid for the test object Butterfly shown in figure 19. So prepared datasets for neural networks represent a significant enrichment of available training data and thus allow increased reliability of pattern recognition.

**Claims**

1. A computer-implemented procedure for noise injection by altering two-dimensional geometric shapes described by Freeman chain codes, wherein the procedure comprises the following steps:

   a. reading of an input geometric shape described by eight- or four-directional Freeman chain codes,
   b. dividing the geometric shape data into separate chains according to the input geometric shape obtained in step a),
   c. iterating through the consecutive pairs of chain codes in separate chains obtained in step b),
   d. random selection of particular chain code pairs determined in step c),
   e. selection of a shape boundary alteration type according to the two chain codes of a pair determined in step d), wherein the shape boundary alteration type is selected from the group consisting of: *WRAP, REMOVE,* and *FLIP,* for four-directional Freeman chain codes, or in the group consisting of: *REMOVE, PUSH, WRAP, FLIP, PULL, CUT,* and *ROTATE* for eight-directional Freeman chain codes,
   wherein

      - REMOVE results in removing the chain codes that define opposite directions,
      - PUSH results in transforming two equal consecutive chain codes into two chain codes that define perpendicular directions and form a turn,
- WRAP results in forming a turn from two equal consecutive diagonal chain codes,
- FLIP results in switching the chain codes in a pair,
- PULL results in transforming a turn into two equal consecutive chain codes,
- CUT results in transforming a pair of chain codes into a single chain code by cutting a turn, and
- ROTATE results in rotating the chain codes in a pair,

f. performing a topology check of the geometric shape with chains obtained in step b) and the selected shape boundary alteration obtained in step e),
g. replacing the chain code pair, selected in step c), with the shape boundary alteration, determined in step e) if the topology check result, obtained in step f), is successful.

2. The procedure according to claim 1, wherein steps c) to g) are repeated until the maximum amount of noise injection iterations is achieved or the fractal dimension of the geometric shape is equal or greater than the defined maximum fractal dimension value.

3. The procedure according to claim 1 or claim 2, **characterised in that** the input two-dimensional geometric shape is read in step a) or obtained from the file formats of Freeman chain codes.

4. The procedure according to any of the preceding claims, wherein step e) is carried out with the following steps:

i. determining the Freeman chain code sequence type, namely either a four-directional or an eight-directional Freeman chain code,
ii. selecting an alteration function in the group consisting of *WRAP, REMOVE,* and *FLIP,* for four-directional Freeman chain codes, and/or in the group consisting of: *REMOVE, PUSH, WRAP, FLIP, PULL, CUT,* and *ROTATE* for eight-directional Freeman chain codes, wherein the functions are defined in the following equation and $c_{i,j}$ represents the first chain code in the selected pair and $c_{i,j+1}$ represents the second chain code in the selected pair and *mod* represents the mathematical operation of modulus

$$
f(c_{i,j}, c_{i,j+1}) = 
\begin{cases}
f_{REMOVE}(); & |c_{i,j} - c_{i,j+1}| = 4 \\[2mm]
f_{PUSH}(c_{i,j}); & (c_{i,j} = c_{i,j+1}) \wedge (c_{i,j} \bmod 2 = 0) \\[2mm]
f_{WRAP}(c_{i,j}); & (c_{i,j} = c_{i,j+1}) \wedge (c_{i,j} \bmod 2 = 1) \\[2mm]
f_{FLIP}(c_{i,j}, c_{i,j+1}); & (|c_{i,j} - c_{i,j+1}| = 1) \vee (|c_{i,j} - c_{i,j+1}| = 7) \\[2mm]
f_{PULL}(c_{i,j}, c_{i,j+1}); & ((|c_{i,j} - c_{i,j+1}| = 2) \vee (|c_{i,j} - c_{i,j+1}| = 6)) \wedge (c_{i,j} \bmod 2 = 1) \\[2mm]
f_{FLIP/CUT}(c_{i,j}, c_{i,j+1}); & ((|c_{i,j} - c_{i,j+1}| = 2) \vee (|c_{i,j} - c_{i,j+1}| = 6)) \wedge (c_{i,j} \bmod 2 = 0) \\[2mm]
f_{ROTATE/CUT}(c_{i,j}, c_{i,j+1}); & (|c_{i,j} - c_{i,j+1}| = 3) \vee (|c_{i,j} - c_{i,j+1}| = 5)
\end{cases}
$$

5. A computer program comprising executable instructions for performing the procedure according to any claim from 1 to 4.

6. A computer readable medium comprising the computer program according to claim 5.

**Patentansprüche**

1. Computerimplementiertes Verfahren für Rauschinjektion durch Verändern zweidimensionaler geometrischer Formen, die durch Freeman-Kettencodes beschrieben werden, wobei das Verfahren die folgenden Schritte umfasst:

   a. Einlesen einer geometrischen Eingabeform, die durch acht- oder vierdimensionale Freeman-Kettencodes beschrieben wird,
   b. Aufteilen der Daten der geometrischen Form in separate Ketten gemäß der in Schritt a) erhaltenen geometrischen Eingabeform,
   c. Iterieren durch die aufeinanderfolgenden Paare von Kettencodes in den in Schritt b) erhaltenen separaten Ketten,
   d. zufällige Auswahl besonderer in Schritt c) bestimmter Kettencodepaare,
   e. Auswahl eines Formgrenzenänderungstyps gemäß der beiden Kettencodes eines in Schritt d) bestimmten Paares, wobei der Formgrenzenänderungstyp ausgewählt wird aus der Gruppe bestehend aus: *WRAP, REMOVE* und *FLIP,* für vierdirektionale Freeman-Kettencodes, oder in der Gruppe bestehend aus: *REMOVE, PUSH, WRAP, FLIP, PULL, CUT* und *ROTATE* für achtdirektionale Freeman-Kettencodes, wobei

      - REMOVE zu einem Entfernen der Kettencodes führt, die entgegengesetzte Richtungen definieren,
      - PUSH aus dem Umwandeln von zwei gleich langen, aufeinanderfolgenden Kettencodes in zwei Kettencodes resultiert, die senkrecht zueinander stehen und eine Kurve bilden,
      - WRAP zu der Bildung einer Kurve aus zwei gleich langen, aufeinanderfolgenden diagonalen Kettencodes führt,
      - FLIP zu dem Vertauschen der Kettencodes in einem Paar führt,
      - PULL aus dem Umwandeln einer Kurve in zwei gleich lange, aufeinanderfolgende Kettencodes resultiert,
      - CUT zu dem Umwandeln von einem Paar Kettencodes in einen einzelnen Kettencode durch Abschneiden einer Kurve führt, und
      - ROTATE zu dem Drehen der Kettencodes in einem Paar führt,

      f. Durchführen einer Topologieprüfung der geometrischen Form mit den in Schritt b) erhaltenen Ketten und der in Schritt e) ausgewählten Formgrenzenänderung,
      g. Ersetzen des in Schritt c) ausgewählten Kettencodepaares durch die in Schritt e) bestimmte Formgrenzenänderung, falls das in Schritt f) erhaltene Ergebnis der Topologieprüfung erfolgreich ist.

2. Verfahren nach Anspruch 1, wobei die Schritte c) bis g) wiederholt werden, bis die maximale Anzahl von Rauschinjektionsiterationen erreicht ist oder die fraktale Dimension der geometrischen Form gleich oder größer als der definierte maximale Wert der fraktalen Dimension ist.

3. Verfahren nach Anspruch 1 oder Anspruch 2, **dadurch gekennzeichnet, dass** die zweidimensionale geometrische Eingabeform in Schritt a) eingelesen oder aus den Dateiformaten von Freeman-Kettencodes erhalten wird.

4. Verfahren nach einem der vorstehenden Ansprüche, wobei Schritt e) mit den folgenden Schritten ausgeführt wird:

   i. Bestimmen des Freeman-Kettencode-Sequenztyps, nämlich entweder eines vierdirektionalen oder eines achtdirektionalen Freeman-Kettencodes,
   ii. Auswählen einer Änderungsfunktion in der Gruppe bestehend aus *WRAP, REMOVE* und *FLIP,* für vierdirektionale Freeman-Kettencodes, oder in der Gruppe bestehend aus: *REMOVE, PUSH, WRAP, FLIP, PULL, CUT* und *ROTATE* für achtdirektionale Freeman-Kettencodes, wobei die Funktionen in der folgenden Gleichung definiert sind und $c_{i,j}$ den ersten Kettencode in dem ausgewählten Paar darstellt, und $c_{i,j+1}$ den zweiten Kettencode in dem ausgewählten Paar darstellt, und *mod* die mathematische Operation Modulo darstellt

$$f(c_{i,j}, c_{i,j+1}) = \begin{cases} f_{REMOVE}(); & |c_{i,j} - c_{i,j+1}| = 4 \\[2ex] f_{PUSH}(c_{i,j}); & (c_{i,j} = c_{i,j+1}) \wedge (c_{i,j} \bmod 2 = 0) \\[2ex] f_{WRAP}(c_{i,j}); & (c_{i,j} = c_{i,j+1}) \wedge (c_{i,j} \bmod 2 = 1) \\[2ex] f_{FLIP}(c_{i,j}, c_{i,j+1}); & (|c_{i,j} - c_{i,j+1}| = 1) \vee \\ & (|c_{i,j} - c_{i,j+1}| = 7) \\[2ex] f_{PULL}(c_{i,j}, c_{i,j+1}); & ((|c_{i,j} - c_{i,j+1}| = 2) \vee \\ & (|c_{i,j} - c_{i,j+1}| = 6)) \wedge \\ & (c_{i,j} \bmod 2 = 1) \\[2ex] f_{FLIP/CUT}(c_{i,j}, c_{i,j+1}); & ((|c_{i,j} - c_{i,j+1}| = 2) \vee \\ & (|c_{i,j} - c_{i,j+1}| = 6)) \wedge \\ & (c_{i,j} \bmod 2 = 0) \\[2ex] f_{ROTATE/CUT}(c_{i,j}, c_{i,j+1}); & (|c_{i,j} - c_{i,j+1}| = 3) \vee \\ & (|c_{i,j} - c_{i,j+1}| = 5) \end{cases}$$

.

**5.** Computerprogramm, das ausführbare Anweisungen zum Durchführen des Verfahrens nach einem der Ansprüche 1 bis 4 umfasst.

**6.** Computerlesbares Medium, das das Computerprogramm nach Anspruch 5 umfasst.

**Revendications**

**1.** Procédé d'injection de bruit dans des formes géométriques 2D décrites par des codes de chaîne de Freeman, ledit procédé comprenant les étapes suivantes :

a. la lecture d'une forme géométrique en entrée décrite par des codes de chaîne de Freeman à huit ou quatre directions,
b. la division des données de forme géométrique en chaînes séparées selon la forme géométrique d'entrée obtenue à l'étape a),
c. l'itération des paires consécutives de codes de chaîne dans les chaînes séparées obtenues à l'étape b),
d. la sélection aléatoire de paires de codes de chaîne particulières déterminées à l'étape c),
e. la sélection d'un type de modification de contour de forme selon les deux codes de chaîne d'une paire déterminée à l'étape d), le type de modification de contour de forme étant sélectionné dans un groupe comprenant : *ENROULER, SUPPRIMER et RETOURNER,* pour des codes de chaîne de Freeman à quatre directions, ou dans le groupe comprenant : *SUPPRIMER, POUSSER, ENROULER, RETOURNER, TIRER, COUPER, et FAIRE PIVOTER* pour les codes de chaîne de Freeman à huit directions, où

- SUPPRIMER a pour résultat la suppression des codes de chaîne qui définissent des directions opposées,
- POUSSER a pour résultat la transformation de deux codes de chaîne consécutifs égaux en deux codes de chaîne qui définissent des directions perpendiculaires et forment un virage,
- ENROULER a pour résultat la formation d'un virage à partir de deux codes de chaîne diagonaux consécutifs égaux,
- RETOURNER a pour résultat la permutation des codes de chaîne d'une paire,
- TIRER a pour résultat la transformation d'un virage en deux codes de chaîne consécutifs égaux,
- COUPER a pour résultat la transformation d'une paire de codes de chaîne en un code de chaîne unique en coupant un virage, et
- FAIRE PIVOTER a pour résultat la rotation des codes de chaîne d'une paire,

f. la réalisation d'un contrôle topologique de la forme géométrique à partir des chaînes obtenues à l'étape b) et de la modification de contour de forme obtenue à l'étape e),
g. le remplacement de la paire de codes de chaîne sélectionnée à l'étape c) par la modification de contour de forme déterminée à l'étape e) si le résultat du contrôle topologique obtenu à l'étape f) est concluant.

2. Procédé selon la revendication 1, dans lequel les étapes c) à g) sont répétées jusqu'à ce que le nombre maximal d'itérations d'injection de bruit soit obtenu ou jusqu'à ce que la dimension fractale de la forme géométrique soit égale ou supérieure à la valeur de dimension fractale maximale définie.

3. Procédé selon la revendication 1 ou la revendication 2, **caractérisé par le fait que** la forme géométrique d'entrée à deux dimensions est lue à l'étape a) ou obtenue à partir de fichiers de codes de chaîne de Freeman.

4. Procédé selon l'une quelconque des revendications précédentes, dans lequel l'étape e) est réalisée avec les étapes suivantes :

i. la détermination du type de séquence de codes de chaîne de Freeman, à savoir, soit un code de chaîne de Freeman à quatre directions, soit un code à huit directions,
ii. la sélection d'une fonction de modification dans le groupe comprenant *ENROULER, SUPPRIMER* et *RETOURNER,* pour les codes de chaîne de Freeman à quatre directions, et/ou dans le groupe comprenant : *SUPPRIMER, POUSSER, ENROULER, RETOURNER, TIRER, COUPER* et *FAIRE PIVOTER,* pour les codes de chaîne de Freeman à huit directions, où les fonctions sont définies dans l'équation suivante et $c_{i,j}$ représente le premier code de chaîne dans la paire sélectionnée et $c_{i,j+1}$ représente le second code de chaîne dans la paire sélectionnée et *mod* représente l'opération mathématique du modulo

$$f(c_{i,j}, c_{i,j+1}) = \begin{cases} f_{REMOVE}(); & |c_{i,j} - c_{i,j+1}| = 4 \\\\ f_{PUSH}(c_{i,j}); & (c_{i,j} = c_{i,j+1}) \wedge (c_{i,j} \bmod 2 = 0) \\\\ f_{WRAP}(c_{i,j}); & (c_{i,j} = c_{i,j+1}) \wedge (c_{i,j} \bmod 2 = 1) \\\\ f_{FLIP}(c_{i,j}, c_{i,j+1}); & (|c_{i,j} - c_{i,j+1}| = 1) \vee \\ & (|c_{i,j} - c_{i,j+1}| = 7) \\\\ f_{PULL}(c_{i,j}, c_{i,j+1}); & ((|c_{i,j} - c_{i,j+1}| = 2) \vee \\ & (|c_{i,j} - c_{i,j+1}| = 6)) \wedge \\ & (c_{i,j} \bmod 2 = 1) \\\\ f_{FLIP/CUT}(c_{i,j}, c_{i,j+1}); & ((|c_{i,j} - c_{i,j+1}| = 2) \vee \\ & (|c_{i,j} - c_{i,j+1}| = 6)) \wedge \\ & (c_{i,j} \bmod 2 = 0) \\\\ f_{ROTATE/CUT}(c_{i,j}, c_{i,j+1}); & (|c_{i,j} - c_{i,j+1}| = 3) \vee \\ & (|c_{i,j} - c_{i,j+1}| = 5) \end{cases} .$$

**5.** Programme informatique comprenant les instructions exécutables pour la réalisation de la procédure selon l'une quelconque des revendications 1 à 4.

**6.** Support lisible par ordinateur comprenant le programme informatique selon la revendication 5.

*Figure 1*

*Figure 2*

*Figure 3*

*Figure 4*

*Figure 5*

Figure 6

Figure 7

Figure 8

Figure 9

Figure 10

Figure 11

Figure 12

Figure 13

Figure 14

Figure 15

(a)          (b)          (c)

*Figure 16*

F8

(a)          (b)          (c)

F4

(d)          (e)          (f)

*Figure 17*

*Figure 18*

F8

(a)          (b)          (c)

F4

(d)          (e)          (f)

*Figure 19*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210035563 A1
- US 11030487 B2
- US 11257272 B2
- US 5982386 A

**Non-patent literature cited in the description**

- **ZUR**. Noise injection for training artificial neural networks: A comparison with weight decay and early stopping. *Medical Physics*, 2009, vol. 36, 4810-4818
- **SUN**. Multiscale generative adversarial network for real-world super-resolution. *Concurrency and Computation: Practice and Experience*, 2021, vol. 33, e6430
- Real-world super-resolution via kernel estimation and noise injection. *Proceedings of the IEEE/CVF Conference on Computer Vision and Pattern Recognition Workshops*, 2020, 466-467
- **RAHAMAN**. Effects of label noise on performance of remote sensing and deep learning-based water body segmentation models. *Cybernetics and Systems*, 2022, vol. 53, 581-606
- **TANG**. Noise estimation of natural images via statistical analysis and noise injection. *IEEE Transactions on Circuits and Systems for Video Technology*, 2014, vol. 25, 1283-1294
- **DONG**. Noise level estimation for natural images based on scale-invariant kurtosis and piecewise stationarity. *IEEE Transactions on Image Processing*, 2016, vol. 26, 1017-1030
- **MA et al.** Efficient image noise estimation based on skewness invariance and adaptive noise injection. *IET Image Processing*, 2020, vol. 14, 1393-1401
- **SÁIZ-ABAJO**. Ensemble methods and data augmentation by noise addition applied to the analysis of spectroscopic data. *Analytica Chimica Acta*, 2005, vol. 533, 147-159